# EUROPÄISCHE PATENTANMELDUNG

(11) **EP 2 026 292 A2**
(43) Veröffentlichungstag der Anmeldung: **18.02.2009**
(21) Anmeldenummer: 08158338.7
(22) Anmeldetag: 16.06.2008
(51) Int. Cl.: G07C 9/00

(54) **Verfahren zur automatischen Überprüfung einer Anzahl Personen auf deren Besitz einer Fahrzeugführungserlaubnis und Überprüfungssystem**

(30) Priorität: 18.06.2007 DE 102007027887
(71) Anmelder: Card & Finance Consulting Gmbh, 90443 Nürnberg (DE)
(72) Erfinder: Krüger, Thomas, 90513 Zirndorf (DE)
(74) Vertreter: Zech, Stefan Markus

(57) **Zusammenfassung**

Die Erfindung betrifft ein Verfahren zur automatischen Überprüfung einer Anzahl Personen auf deren Besitz einer Fahrzeugführungserlaubnis (1), insbesondere auf Besitz eines Führerscheins, mit einem Überprüfungssystem (2), bei dem jede zu prüfende Person nach Aufforderung zur Überprüfung durch das Überprüfungssystem (2) die mit einem Identifikationsmerkmal (3) versehene Fahrzeugführungserlaubnis (1) von einem Lesegerät (4) lesen lässt, das Bestandteil des Überprüfungssystems (2) ist, wobei in dem Überprüfungssystem (2) eine Prüfung und Dokumentation der Fahrzeugführungserlaubnis (1) dahingehend erfolgt, ob und wann die geprüfte Person die Fahrzeugführungserlaubnis (1) zur Prüfung vorgelegt hat, wobei durch das Überwachungssystem (2) zusätzlich überprüft wird, ob eine oder mehrere der einer zu überprüfenden Person zugeordneten Fahrzeuge innerhalb einer vorgegebenen Fahrzeugprüffrequenz F_{1,2} eine technische Überprüfung Ü_{T} und/oder eine Überprüfung Ü_{E} des Erscheinungsbildes erfolgreich absolviert haben.

## Beschreibung

Die Erfindung betrifft ein Verfahren zur automatischen Überprüfung einer Anzahl Personen auf deren Besitz einer Fahrzeugführungserlaubnis, insbesondere auf Besitz eines Führerscheins, mit einem Überprüfungssystem, bei dem jede zu prüfende Person nach Aufforderung zur Überprüfung durch das Überprüfungssystem die mit einem Identifikationsmerkmal versehene Fahrzeugführungserlaubnis von einem Lesegerät lesen lässt, das Bestandteil des Überprüfungssystems ist, wobei in dem Überprüfungssystem eine Prüfung und Dokumentation dahingehend erfolgt, ob und wann die geprüfte Person die Fahrzeugführungserlaubnis zur Prüfung vorgelegt hat. Des weiteren betrifft die Erfindung ein Überprüfungssystem zur automatischen Überprüfen einer Anzahl Personen.

Ein gattungsgemäßes Verfahren ist beispielsweise aus der DE 10 2005 038 361 A1 bekannt. Eine ähnliche Lösung zeigt die EP 1 733 938 A1. Es besteht insbesondere bei Dienstfahrzeugen von Mitarbeitern eines Unternehmens eine gesetzliche Pflicht des Dienstherrn, sich in regelmäßigen Abständen davon zu überzeugen, dass die Dienstwagenberechtigten Mitarbeiter noch im Besitz eines gültigen Führerscheins sind.

Um die diesbezügliche Prüfung in möglichst automatisierter Weise durchzuführen, wird ein Überprüfungssystem eingesetzt, das eine zentrale Einheit umfasst, die mit dezentral angeordneten Lesegeräten in Verbindung steht. Die zu überprüfenden Mitarbeiter werden in regelmäßigen Zeitabständen aufgefordert, den Führerschein zur Überprüfung vorzulegen.

Daraufhin begeben sich die Mitarbeiter zu einem Lesegerät, in das der Führerschein eingelesen wird. Um sicher zu gehen, dass sich nur die maßgebliche Person der Prüfung unterzieht, ist der Führerschein mit einem Identifikationsmerkmal ausgestattet, der seine Identifikation ermöglicht. Im Überprüfungssystem kann dann eine Prüfung und anschließende Dokumentation dahingehend erfolgen, dass der mit einem eindeutigen Identifikationsmerkmal ausgestattete Führerschein vorgelegt wurde.

Nachteilig ist bei den vorbekannten Verfahren und Systemen zur Überwachung, dass sie relativ unflexibel und in ihrer Anwendbarkeit beschränkt sind.

Der Erfindung liegt daher die Aufgabe zugrunde, ein Verfahren der eingangs genannten Art sowie ein zugehöriges Überwachungssystem so fortzubilden, dass die Pflichten des Fahrzeughalters auf noch einfachere Weise erfüllt werden können. Vorzugsweise soll die Überwachung bzw. das System auch in einfacher Weise optimal an geänderte Umstände angepasst werden können.

Die Lösung dieser Aufgabe durch die Erfindung ist verfahrensgemäß dadurch gekennzeichnet, dass durch das Überwachungssystem zusätzlich überprüft wird, ob eine oder mehrere der einer zu überprüfenden Person zugeordneten Fahrzeuge innerhalb einer vorgegebenen Fahrzeugprüffrequenz F_{1,2} eine technische Überprüfung Ü_{T} und/oder eine Überprüfung Ü_{E} des Erscheinungsbildes erfolgreich absolviert haben.

Das Überprüfungssystem hat bevorzugt eine Zentraleinheit, wobei die Überprüfung durch Eingabe der mit einem Identifikationsmerkmal versehenen Fahrzeugführungserlaubnis in das Lesegerät an einem von der Zentraleinheit beabstandeten Ort erfolgt. Das Lesegerät kann dabei als mobile Einheit ausgeführt sein und die Überprüfung durch Datenfernübertragung zur Zentraleinheit erfolgen.

Vorzugsweise wird mit dem Lesegerät auch ein originalgetreues Bild des Identifikationsmerkmals, welches vorzugsweise im Lesegerät abgespeichert und/oder an eine Zentraleinheit weitergeleitet wird, erfasst. Dadurch wird auf einfache Art eine zeitlich und räumlich getrennt ausführbare Echtheitsprüfung des Identifikationsmerkmals ermöglicht. Außerdem kann die Zuverlässigkeit der Überprüfung des Identifikationsmerkmals auch dadurch erhöht werden, dass eine zweifache Prüfung in dem Sinne stattfindet, dass nicht nur am bzw. im Lesegerät selbst eine Echtheitsprüfung stattfindet, sondern zusätzlich noch beispielsweise in der Zentraleinheit eine solche vorgenommen werden kann. Diesbezüglich bietet es sich auch an, das Identifikationsmerkmal beispielsweise in einer Datenbank der Zentraleinheit langfristig zu speichern, so dass auch noch nach längerer Zeit eine zusätzliche Echtheitsprüfung vorgenommen werden kann. Dadurch ist es dann möglich, falls ein systematischer Fehler bei der Überprüfung oder auch ein systematisches vorsätzliches oder unabsichtliches Fehlverhalten von Personen im Zusammenhang mit der Echtheitsprüfung, festgestellt wird, eine erneute Prüfung vorzunehmen.

Als Identifikationsmerkmal kann vorzugsweise eine optische Kennung zum Einsatz kommen, welche beispielsweise durch Drehen ausgelesen werden kann. Insbesondere bietet sich als optische Kennung ein Hologramm und/oder ein Kinegramm an. Der Einsatz derartiger optischer Kennungen ermöglicht ein besonders ökonomisches Verfahren, wobei zugleich auch eine visuelle Echtheitsprüfung durch eine dritte Person vorgenommen werden kann.

In einer bevorzugten Weiterbildung des Verfahrens werden zusätzlich vom Überwachungssystem vor oder während der Überprüfung der Fahrzeugführungserlaubnis und der technischen Überprüfung und/oder der Überprüfung des optischen Erscheinungsbildes, Fragen angeboten, die zum Abschluss der Überprüfungen beantwortet werden müssen. Dadurch würde auf einfache Weise der Kenntnisstand der Fahrzeugführenden im Sinne einer Fortbildung gehoben. Ein besonderer Vorteil bestünde darin, dass so genannte "schwarze Schafe", die möglicherweise Überprüfungen in höherer Frequenz vornehmen müssen, auch häufiger Fragen zu beantworten haben, so dass insbesondere der Kenntnisstand dieser sich fehlverhaltenden Personen gehoben würde. Zusätzlich wäre es auch denkbar, dass die Qualität der jeweiligen Antworten als Parameter herangezogen wird, um die diversen Prüffrequenzen zu erhöhen oder auch zu erniedrigen. Aufgrund dieser verschiedenen Wechselwirkungen ließen sich die Prüffrequenzen besonders sinnvoll anpassen.

In einer bevorzugten Weiterbildung des Verfahrens werden nach der Aufforderung zur Überprüfung zusätzlich durch das Prüfungssystem Daten einer vorzugsweise mit einem Identifikationsmerkmal versehenen Fahrerkarte und/oder Daten einer vorzugsweise ebenfalls mit einem Identifikationsmerkmal versehenen Fahrzeugkarte über das Lesegerät ausgelesen. Die jeweiligen Identifikationsmerkmale können dabei analog zum Identifikationsmerkmal der Fahrzeugführungserlaubnis ausgebildet sein. Die Daten können eine Kennnummer zur eindeutigen Kennzeichnung der Fahrer- bzw. Fahrzeugkarte enthalten. Weiterhin können die Daten ein insbesondere digitales Fahrtenbuch umfassen, in dem beispielsweise die Arbeitszeit, die Kilometerleistung, eingelegte Pausen, Verkehrsunfälle und dergleichen, umfassen. In ähnlicher Weise können die Daten der Fahrzeugkarte Einsatzzeiten, Kilometerleistung, Reparaturen und dergleichen, registriert bzw. digital gespeichert sind. Insgesamt wird dadurch nicht nur die Effizienz des Verfahrens nochmals deutlich erhöht, sondern es können darüber hinaus auch noch verschiedene Wechselwirkungen zwischen den einzelnen Datensätzen analysiert und genutzt werden.

In einer bevorzugten Ausgestaltung wird durch das Überwachungssystem überwacht, ob innerhalb einer ersten Fahrzeugprüffrequenz F₁ die technische Überprüfung Ü_{T}, insbesondere nach BGV D29, erfolgreich absolviert wurde.

In einer ebenfalls bevorzugten Weiterbildung wird durch das Überwachungssystem überwacht, ob innerhalb einer zweiten Fahrzeugprüffrequenz F₂ die Überprüfung des Erscheinungsbildes Ü_{E} (optische Zustandskontrolle) erfolgreich absolviert wurde.

Vorzugsweise ist zumindest die zweite Fahrzeugprüffrequenz F₂ einstell- bzw. änderbar, vorzugsweise auch für eine zu überprüfende Person individuell veränderbar, wobei diese zweite Fahrzeugprüffrequenz F₂ weiter vorzugsweise auch für eine zu überprüfende Person individuell verändert, insbesondere erhöht oder verringert werden kann.

Weiter vorzugsweise wird zumindest für einen Teil der zu überprüfenden Personen mindestens ein individueller Prüfparameter festgelegt. Bei diesem Prüfparameter handelt es sich vorzugsweise um eine personenbezogene Prüffrequenz, d. h. um den zeitlichen Abstand zwischen zwei vorzunehmenden Überprüfungen.

Die Festlegung des individuellen Prüfparameters, insbesondere der individuellen Prüffrequenz, und/oder der Fahrzeugprüffrequenzen F_{1,2}, kann dabei in dem Überprüfungssystem vorzugsweise nur von einer autorisierten Person vorgenommen werden, um Missbrauch zu verhindern.

Speziell kann auch die Einhaltung von auf der Fahrerlaubnis bzw. dem Führerschein vorgegebenen Einschränkungen oder Befristungen mittels des vorgeschlagenen Verfahrens bzw. des zugehörigen Überwachungssystems überprüft werden.

Die Festlegung des individuellen Prüfparameters, insbesondere der individuellen Prüffrequenz, und/oder der Fahrzeugprüffrequenzen F_{1,2}, kann dabei im Uberprüfungssystem zu jedem Zeitpunkt veränderbar sein.

Die Prüfparameter, insbesondere die individuellen Prüffrequenzen und/oder die Fahrzeugprüffrequenzen F_{1,2}, können zunächst - in einem Ausgangs- oder Startzustand - für alle zu überprüfende Personen in einem Grundzustand einheitlich auf einen festen Wert eingestellt werden. Die individuellen Prüffrequenzen sind dabei vorzugsweise für alle zu überprüfende Personen im Grundzustand auf sechs Monate eingestellt. Die Fahrzeugprüffrequenz F₁ für eine technische Überprüfung Ü_{T} muss mindestens den gesetzlichen Rahmen erfüllen, beispielsweise alle zwölf Monate erfolgen, kann selbstverständlich, falls gewünscht, auch in kürzeren als den gesetzlich geforderten Abständen vorgenommen werden. Die Fahrzeugprüffrequenz F₂ kann in einem Grundzustand beispielsweise auf sechs Monate eingestellt werden. Alle Prüffrequenzen, also die individuelle Prüffrequenz sowie die Fahrzeugprüffrequenz F₁ sowie die Fahrzeugprüffrequenz F₂, können dann aber für eine zu überprüfende Person bei Auffälligkeiten im Fahrverhalten oder beim Vorliegen anderer spezifischer Umstände von dem im Grundzustand eingestellten Wert herabgesetzt oder auch angehoben werden, um eine individuelle Anpassung der Überprüfung zu ermöglichen, wenngleich selbstverständlich die gesetzlich geforderten Fristen einzuhalten sind. Die individuelle Prüffrequenz und/oder die erste Fahrzeugprüffrequenz F₁ und/oder die zweite Fahrzeugprüffrequenz F₂ kann dabei bei Auffälligkeiten in Schritten von jeweils einem Monat herabgesetzt werden.

Vorzugsweise wird das Ergebnis, ob ein Fahrzeug innerhalb der vorgegebenen Fahrzeugprüffrequenz die technische Überprüfung und/oder die Überprüfung des Erscheinungsbildes erfolgreich durchlaufen hat, durch die entsprechende Durchführungsstelle selbst eingegeben und dieses Ergebnis an die Zentraleinheit überführt. Dies kann analog auch bezüglich der Überprüfung der Fahrzeugführungserlaubnis, der Fahrer- und/oder Fahrzeugkarte erfolgen.

Das Überprüfungssystem mit einer Zentraleinheit sowie mit mindestens einem Lesegerät ist erfindungsgemäß dadurch gekennzeichnet, dass Überprüfungssystem mit Eingabemitteln oder einer Datenverarbeitungsanlage bei Fahrzeugüberprüfungsstellen in Wirkverbindung steht, wobei über die Eingabemittel bzw. die DV-Anlage der Fahrzeugüberprüfungsstelle das Ergebnis einer Fahrzeugüberprüfung an die Zentraleinheit übermittelt wird.

Vorzugsweise umfasst das Identifikationsmerkmal eine optische Kennung, welche insbesondere durch Drehen auslesbar ist, beispielsweise ein Hologramm und/oder ein Kinegramm.

In einer bevorzugten Ausgestaltung wird durch das Überwachungssystem überprüft, ob eine oder mehrere der einer zu überprüfenden Person zugeordneten Fahrzeuge innerhalb einer vorgegebenen Fahrzeugprüffrequenz F_{1,2} eine technische Überprüfung Ü_{T} und/oder eine Überprüfung Ü_{E} des Erscheinungsbildes erfolgreich absolviert haben.

Weiter vorzugsweise weist die Zentraleinheit einen Speicherbereich auf, in dem für jede zu überprüfende Person mindestens ein individueller Prüfparameter, insbesondere eine individuelle Prüffrequenz, und/oder eine erste Fahrzeugprüffrequenz F₁ und/oder eine zweite Fahrzeugprüffrequenz F₂, speicherbar ist.

Vorzugsweise ist die optische Kennung bzw. das Identifikationsmerkmal originalgetreu auslesbar und abspeicherbar.

Vorzugsweise ist dabei ein Sicherungssystem vorgesehen, dass Einstellungen und Änderungen der in dem Speicherbereich für die Prüfparameter, insbesondere für die individuelle Prüffrequenz und/oder für die erste Fahrzeugprüffrequenz und/oder für die zweite Fahrzeugprüffrequenz, hinterlegten Daten nur autorisierten Personen ermöglicht.

Das mindestens eine Lesegerät ist vorzugsweise von der Zentraleinheit beabstandet angeordnet. Das Lesegerät und die Zentraleinheit kommunizieren dabei bevorzugt über eine Datenfernübertragungsverbindung miteinander. Die Datenfernübertragungsverbindung kann ein Mobiltelefon umfassen.

Die Zentraleinheit ist vorzugsweise als internetbasierter Server ausgebildet.

Neben der Berücksichtigung besonderer Verhaltensweise eines dienstwagenberechtigten Mitarbeiters können gegebenenfalls auch andere Parameter für die Veränderung der Überwachungsroutine herangezogen werden. So können auch Interdependenzen ausgenutzt werden, konkret aus der Prüfung der Fahrzeugführungserlaubnis gewonnene Erkenntnisse bei Festlegung der individuellen Fahrzeugprüffrequenzen herangezogen werden bzw. vice versa. Auch können Korrelationen zwischen der technischen Überprüfung Ü_{T} und der Überprüfung des Erscheinungsbildes Ü_{E} hergestellt bzw. ausgenutzt werden. Beispielsweise kann, wenn sich bei der Überprüfung des Erscheinungsbildes ein sehr ungepflegter Fahrzeugzustand ergibt eine gewisse Nachlässigkeit der dem Fahrzeug zugeordneten Person unterstellt werden, so dass es angezeigt erscheinen könnte, die individuelle Prüffrequenz hinsichtlich der Überprüfung der Fahrzeugführungserlaubnis und/oder die erste Fahrzeugprüffrequenz hinsichtlich der technischen Überprüfung herabzusetzen.

Mit dem vorgeschlagenen Verfahren bzw. dem vorgeschlagenen Überprüfungssystem können die Ergebnisse der verschiedenen Überprüfungen miteinander kombiniert werden, so dass sich insgesamt eine synergistische Wechselwirkung ergibt und ein leistungsfähiges Verfahren sowie ein leistungsfähiges Überprüfungssystem bereitgestellt werden.

Hinsichtlich der Überprüfung einer Anzahl Personen auf deren Besitz einer Fahrzeugführungserlaubnis kann daran gedacht werden, jedenfalls zunächst eine intensivere Überwachung eines Mitarbeiters vorzunehmen, wenn dieser mit einem besonders stark motorisierten Kraftfahrzeug ausgestattet wird.

Generell ist es denkbar, auch weitere Parameter hinsichtlich der Festlegung der individuellen Prüffrequenz und/oder der ersten Fahrzeugprüffrequenz und/oder der zweiten Fahrzeugprüffrequenz zu berücksichtigen, wie beispielsweise gefahrene Kilometer, Verbrauch des Wagens, etc.

Die Wahl des individuellen Prüfzyklus kann in Abhängigkeit bekannt gewordener Verkehrswidrigkeiten erfolgen. Hierfür kann gegebenenfalls Einsicht in die "Verkehrssünderkartei" genommen werden. In Abhängigkeit der Relevanz von Verkehrswidrigkeiten kann dann gegebenenfalls der Prüfzyklus entsprechend angepasst, d. h. verkürzt werden.

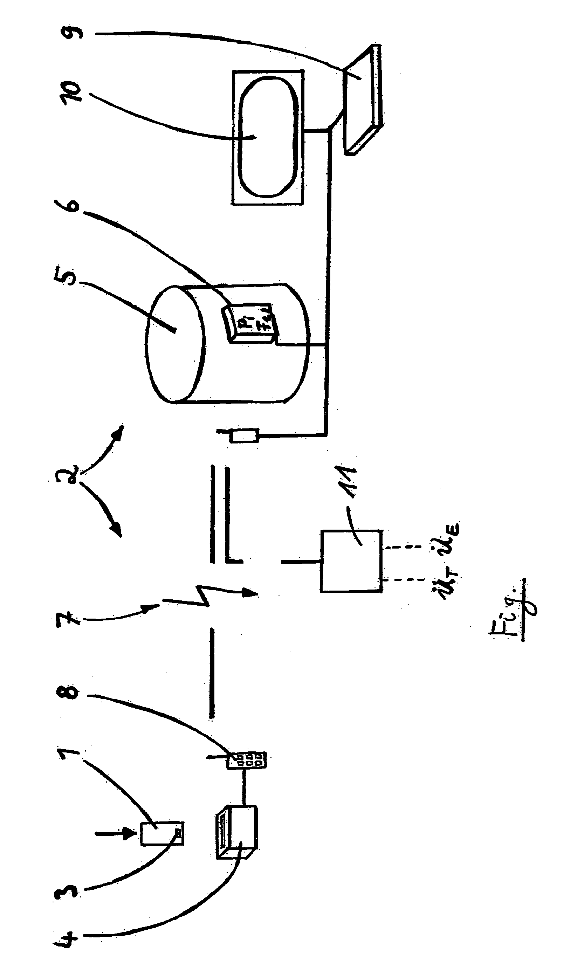

In der Zeichnung ist ein Ausführungsbeispiel der Erfindung skizziert. Die einzige Figur zeigt schematisch ein Überprüfungssystem, mit dem die Dienstwagenberechtigten Mitarbeiter eines Unternehmens daraufhin überwacht werden können, ob sie über einen gültigen Führerschein verfügen und das ihnen zugeordnete Fahrzeug innerhalb einer vorgegebenen Fahrzeugprüfungsfrequenz daraufhin überprüft wurde, ob es den technischen Anforderungen genügt und/oder Mindestkriterien an ein gefordertes Erscheinungsbild erfüllt. Weiterhin müssen die den Personen zugeordneten Fahrzeuge regelmäßig einer gesetzlichen technischen Überprüfung Ü_{T} unterzogen werden, wobei dies bei Dienstwagen eines Fuhrparks zumindest alle zwölf Monate erfolgen muss.

Darüber hinaus hat der Betreiber eines Fuhrparks und/oder der Eigentümer der in einem Fuhrpark aufgenommenen Fahrzeuge ein Interesse daran, den Erhaltungszustand bzw. das Erscheinungsbild der einem oder mehreren Fahrern zugeordneten Fahrzeuge regelmäßig zu überprüfen und eine solche Überprüfung kann im Rahmen einer Überprüfung Ü_{F} des Erscheinungsbildes erfolgen. Sowohl die technische Überprüfung Ü_{T} sowie die Überprüfung Ü_{F} des Erscheinungsbildes können von Fahrzeugüberprüfungsstellen, wie sie beispielsweise der TÜV in Deutschland bereit hält, durchgeführt werden.

Insbesondere in größeren Fuhrparks oder bei Leasingunternehmen ist es teilweise gesetzliche Pflicht, regelmäßig - und zwar zumeist alle sechs Monate - eine Kontrolle aller Wagenfahrer vorzunehmen, ob diese noch im Besitz eines gültigen Führerscheins sind. Diese Überprüfung ist entsprechend zu dokumentieren.

Hinsichtlich der Überprüfung, ob eine bestimmte Person im Besitz einer Fahrzeugführungserlaubnis ist, werden die Daten der zu überprüfenden Dienstwagenfahrer in eine vorzugsweise internetbasierte Datenbank geladen und eine Frequenz definiert, die für die periodische Abfrage der einzelnen Fahrer zugrunde gelegt wird.

Der typische Rhythmus beträgt dabei sechs Monate, d. h. jeder Fahrer erhält - von dem Überwachungssystem automatisch ausgelöst - eine Einladung, den Führerschein vorzulegen.

Bei einer klassischen Verfahrensweise wird der Fahrer im Namen seines Unternehmens aufgefordert, innerhalb einer bestimmten Frist, meist vier bis sechs Wochen, beispielsweise an einer TÜV-Prüfstelle zu erscheinen und seinen Führerschein vorzulegen. Der Prüfer ruft den Fahrer anhand seines Namens in der Datenbank des Überwachungssystems auf und prüft, ob der Name auf dem Führerschein identisch ist mit dem auf dem Einladungsschreiben und dem zugehörigen Namen in der Datenbank.

Bei der erstmaligen Prüfung dieser Art werden die relevanten Daten des Führerscheins (Fahrklassen, Datum der Ausstellung, ausstellende Behörde, Einschränkungen, etc.) in eine Eingabemaske eingegeben und der Besitz des Führerscheins bestätigt. Bei allen späteren Prüfungen muss nur noch der vorgelegte Führerschein mit den Daten im System abgeglichen und die ordnungsgemäße Vorlage bestätigt werden.

Der Führerschein wird also bei allen Prüfungen gemäß dieser Vorgehensweise von einer autorisierten Person eingesehen. Bei der Prüfung wird neben dem Prüfergebnis und dem Tag der Prüfung auch der Name der prüfenden Person festgehalten.

Dabei können dem Fahrer ein oder mehrere Fahrzeuge über das Kennzeichen zugeordnet werden. Die Prüfung kann weiterhin - wie bereits erwähnt - um die Durchführung einer vorgeschriebenen technischen Überprüfung Ü_{T} (z.B. BGV D29) ergänzt werden. Die Prüfung kann alternativ oder zusätzlich - wie ebenfalls bereits erwähnt - auch um die Durchführung einer Überprüfung Ü_{E} des Erscheinungsbildes des Fahrzeuges ergänzt werden. Hierbei kann der allgemeine Pflegezustand einbezogen werden, beispielsweise ob Fahrzeugbeschriftung vorhanden und ggf. beschädigt ist, ob erhebliche Verschmutzungen vorliegen, bzw. sonstige Bemerkungen zum allgemeinen Pflegezustand erfasst werden und eine abschließende Beurteilung darüber gebildet werden, ob der allgemeine Pflegezustand in Ordnung bzw. nicht in Ordnung ist. Hinsichtlich des Innenraums, der Innenraumverkleidung, des Zustandes von Lack und Karosserie, des Zustandes der Frontscheibe, der Räder, Felgen sowie der Bereifung erfolgt ebenfalls eine Beurteilung anhand festgelegter Kriterien, ob diese in Ordnung bzw. nicht in Ordnung sind. Eine weitere Überprüfung kann die Vollständigkeit der Ausstattung, insbesondere unter Einbeziehung der Sicherheitsausstattung, umfassen.

Weiterhin kann die Prüfung die Durchführung einer zusätzlichen Überprüfung einer Fahrzeug- und/oder Fahrerkarte umfassen. Insbesondere können dabei Daten, die verschiedene Parameter, wie Fahrtzeiten, Anzahl der Kilometer, Pausenzeiten und dergleichen umfassen können, ausgelesen werden. Die Fahrer- bzw. Fahrzeugkarte sollen in diesem Zusammenhang nicht wörtlich als Karte bzw. Speicherkarte verstanden werden, sondern allgemeiner als Identifikationen, die dem Fahrzeug bzw. dem Fahrer zugeordnet sind, und jede beliebige Gestalt annehmen können. Im Falle, dass an der Fahrer- bzw. Fahrzeugkarte ein Identifikationsmerkmal vorgesehen ist, kann dieses prinzipiell genauso ausgebildet sein, wie das Identifikationsmerkmal der Fahrzeugführungserlaubnis. Eine konkrete Ausführungsform eines derartigen Identifikationsmerkmals wird weiter unten noch ausführlicher beschrieben werden.

Zusätzlich zu den bereits beschriebenen Überprüfungen ist es auch vorteilhaft, wenn während bzw. vor oder nach den Überprüfungen dem Fahrerzeugführer zu beantwortende Fragen angeboten werden. Die Beantwortung dieser Fragen kann verpflichtend sein oder auch der freiwilligen Fortbildung dienen. Vorzugsweise können die Fragen über einen Bildschirm angezeigt werden, welcher sich beispielsweise in räumlicher Nähe zum Lesegerät befindet bzw. in baulicher Einheit mit dem Lesegerät ausgeführt ist. Die Beantwortung der Fragen kann verbal, über Berührung des Bildschirms oder auch durch den Einsatz von Berühren an einer Tastatur erfolgen. Insbesondere ist es vorteilhaft, wenn in ein und der selben Einrichtung sowohl ein Lesegerät vorgesehen ist, welches Daten der Fahrzeugführungserlaubnis, der Fahrer- und Fahrzeugkarte ausliest und eventuell abspeichert, und gleichzeitig ein Bildschirm mit Eingabemitteln zur Verfügung gestellt wird, über den Fragen bzw. allgemeine Informationen angezeigt werden können. Vorstellbar sind in diesem Zusammenhang auch eine beispielsweise internetgestützte Kommunikationsmöglichkeit zwischen einer solchen Einrichtung und der Zentraleinheit.

Die für das Betreiben eines Fuhrparks notwendigen bzw. sinnvollen Maßnahmen können dabei in relativ effizienter Weise an ein und der selben Fahrzeugüberprüfungsstelle durchgeführt werden, was den Prozess insgesamt deutlich vereinfacht.

Hinsichtlich der Überprüfung der Fahrzeugführungserlaubnis ist es darüber hinaus möglich, die Prüfung über ein Lesegerät auch an anderen oder zusätzlichen Orten als nur am Ort einer Fahrzeugüberprüfungsstelle durchzuführen. Auch hier erfolgt der Ablauf hinsichtlich der Überprüfung des Vorhandenseins einer Fahrzeugführungserlaubnis analog; insbesondere werden die Fahrer vom System automatisch in definierten Zeitabständen kontaktiert und aufgefordert, sich der Überprüfung zu unterziehen.

Die Aufforderung kann per Brief, per E-Mail oder auch per SMS erfolgen.

Das Überprüfungssystem 2 besteht in einer konkreten Ausführungsform im Wesentlichen aus einer Zentraleinheit 5, die als internetbasierter Server ausgebildet sein kann. Die Zentraleinheit hat periphere Geräte, wie beispielsweise eine Dateneingabevorrichtung 9 (Tastatur) mit Anzeigevorrichtung 10 (Monitor).

Die Zentraleinheit 5 steht über eine Datenfernübertragungsverbindung 7 mit einem Lesegerät 4 in Verbindung. Im Ausführungsbeispiel ist das Lesegerät 4 mit einem Mobiltelefon 8 verbindbar, um auf diese Weise mit der Zentraleinheit 5 in Verbindung treten zu können.

Durch das Lesegerät 4 kann das auf dem Führerschein 1 aufgebrachte Identifikationselement 3 ausgelesen werden. Konkret ist auf dem Führerschein 1 ein Identifikationselement 3 angeordnet. Dieses Identifikationselement 3 wird nach einer erstmaligen Prüfung von einer autorisierten Person oder Stelle auf dem Führerschein 1 angebracht. Dem Führerschein ist im System entsprechend ein bestimmter Fahrer zugeordnet. Die erstmalig prüfende Person kann beispielsweise der Fuhrparkleiter oder eine von ihm beauftragte Person sein. Ebenso können durch das Lesegerät 4 auch die Identifikationsmerkmale der Fahrer- und Fahrzeugkarte ausgelesen werden.

Bei dem Identifikationselement 3 sowie den Identifikationsmerkmalen der Fahrer- und Fahrzeugkarte kann es sich um eine optische Kennung, beispielsweise ein fälschungssicheres Hologramm, um ein Kinegramm oder um ein Label mit integriertem RFID-Chip oder UV-Farbe mit integrierter Nummerierung nach Vorgaben des Betreibers handeln. Insoweit kann es sich bei dem Lesegerät 4 um einen Barcodeleser (Scanner), um ein RFID-Terminal oder um ein beliebiges anderes Gerät handeln, das entsprechende Daten lesen kann. Das angesprochene Gerät ist aber im vorliegenden Fall nicht nur in der Lage, Daten auszulesen, sondern auch originalgetreue Bilder von optischen Kennungen aufzunehmen, weiterzuleiten bzw. zu speichern. Dadurch kann eine Echtheitsprüfung auch von einem beabstandeten Ort und zeitlich versetzt erfolgen. Beispielsweise kann das Auslesen der Fahrerkarte alle 28 Tage erfolgen, wobei die ausgelesenen Daten mindestens 2 Jahre zur Analyse gespeichert werden. Bei der Fahrzeugkarte werden die Daten vorzugsweise alle 92 Tage ausgelesen und gleichfalls mindestens 2 Jahre gespeichert. Insbesondere die Möglichkeit ein originalgetreues Abbild der optischen Kennungen auszulesen, extern zu analysieren und ggf. abzuspeichern erhöht die Sicherheit des Überprüfungssystems 2 beträchtlich, da effektiv bestehende Sicherheitslücken im Stand der Technik geschlossen werden können.

Der Materialaufbau des Identifikationselements 3 ist dabei dergestalt gewählt, dass bei dem Versuch, das Identifikationselement 3 vom Führerschein 1 abzulösen (um es gegebenenfalls in unerlaubter Weise an einem anderen Dokument anzubringen), zerstört oder zumindest so geschädigt wird, dass die Funktion nicht mehr gewährleistet ist. In gleicher Weise können auch die Identifikationsmerkmale der Fahrer- und Fahrzeugkarte ausgebildet sein.

Das Lesegerät 4 ist also beispielsweise mit einem Scanner, einem RFID- oder mit einem Chipkarten-Lesemodul ausgestattet. Die ausgelesenen Daten werden mit einer Sicherheitssoftware verifiziert und dann mit den weiteren benötigten Daten (Tag und Uhrzeit der Prüfung, Standort Terminal/Lesegerät) an die Zentraleinheit 5 gesendet. Die Verarbeitung wird mit einer Klartextmeldung angezeigt. In einer einfachen, bevorzugten Ausgestaltung wird vom Lesegerät 4 lediglich ein im Identifikationselement 3 gespeicherter Kode ausgelesen und an die Zentraleinheit 5 übersandt. In der Zentraleinheit 5 erfolgt die Zuordnung des ausgelesenen Kodes zu einer zu überprüfenden Person. Bei erfolgreicher Prüfung erfolgt vorzugsweise ebenfalls eine entsprechende Anzeige, wobei hierzu die Zentraleinheit 5 eine entsprechende Bestätigung an das Lesegerät 4 bzw. das Terminal zurücksendet.

Die erfolgte Prüfung wird in der Zentraleinheit 5 unter den Daten des Fahrers registriert und kann vom Fuhrparkverantwortlichen als Nachweis herangezogen werden, dass der Halter des Fahrzeugs (also das Unternehmen) seiner Verpflichtung zur regelmäßigen Führerscheinkontrolle nachgekommen ist.

Sofern ein Fahrer der Aufforderung zur Prüfung nicht im vorgegebenen Zeitraum nachgekommen ist, können Mahnungen erfolgen und damit wiederum neue Prüfungsfristen definiert werden. Bei weiterer Nichtbefolgung können entsprechende Hinweis an den Verantwortlichen ausgegeben werden, damit dieser weitergehende Maßnahmen ergreift.

Eine bevorzugte Ausgestaltung des Lesegeräts 4 ist die genannte mobile Lösung. Es ist aber beispielsweise auch möglich, Lesegeräte an bestimmten Orten aufzustellen, z. B. an Tankstellen etc.

In der Zentraleinheit 5 wird die Identifikationsnummer gemäß dem Identifikationselement 3 dem dort registrierten Benutzer (Fahrer) zugeordnet und entsprechend gespeichert.

Weiter steht die Zentraleinheit 5 über eine Datenfernübertragungsverbindung 7 mit einer Fahrzeugüberprüfungsstelle 11 bzw. deren Datenverarbeitungsanlage oder Eingabegerät in Wirkverbindung. Ausgehend von der Fahrzeugüberprüfungsstelle 11, deren Datenverarbeitungsanlage bzw. dort vorhandenen Eingabemitteln wird eine Information an die Zentraleinheit 5 übermittelt, ob ein einem oder mehreren Personen zugeordnetes Fahrzeug eine technische Überprüfung Ü_{T} und/oder eine Überprüfung Ü_{E} des Erscheinungsbildes erfolgreich durchlaufen hat.

Wichtiger Bestandteil der Zentraleinheit 5 ist ein Speicherbereich 6 für individuelle Prüfparameter Pᵢ, F₁, F₂. Wenngleich das Verfahren nicht darauf beschränkt ist, handelt es sich bei den Prüfparametern Pᵢ zumeist um die individuelle Prüffrequenz, d. h. um die Zeit zwischen zwei Aufforderungen an den Fahrer, seinen Führerschein vorzulegen. Bei den Prüfparametern F₁ bzw. F₂ handelt es sich um die Fahrzeugüberprüfungsfrequenzen F₁ bzw. die Fahrzeugüberprüfungsfrequenz F₂, das heißt um die Intervalle innerhalb derer ein einer oder mehreren Personen zugeordnetes Fahrzeug eine technische Überprüfung Ü_{T} bzw. eine Überprüfung Ü_{E} des Erscheinungsbildes zu durchlaufen hat. In ähnlicher Weise kann auch die Fahrzeugprüffrequenz F₁ und/oder die Fahrzeugprüffrequenz F₂ individuell angepasst, insbesondere auch individuell herabgesetzt werden.

Damit kann eine individuelle Anpassung der überwachungsrelevanten Daten erfolgen, die sich an der persönlichen Situation eines Fahrers orientiert. Die Prüfung, ob ein Fahrer noch einen Führerschein hat, kann also individuell vorgegeben werden und mit in Betracht ziehen, ob der Fahrer wegen Verkehrswidrigkeiten auffällig geworden ist. Für solche Fahrer kann das individuelle Prüfintervall herabgesetzt werden.

Wesentlich ist weiterhin, dass die Vorgabe und die Veränderung der Prüfparameter Pᵢ, insbesondere der individuellen Prüffrequenz, der Fahrzeugprüffrequenz F₁ bzw. der Fahrzeugprüffrequenz F₂, bevorzugt nur von autorisierten Personen erfolgen kann.

Hierbei ist insbesondere an den Fuhrparkmanager eines Unternehmens oder an den Betreiber des Überwachungssystems gedacht, die die alleinige Befugnis haben können, die in der Speichereinheit 6 gespeicherten Prüfparameter Pᵢ, F₁ und/oder F₂ zu verändern.

Dies kann dann jederzeit erfolgen, so dass auf Veränderungen unmittelbar reagiert werden kann.

Ist ein Fahrer auffällig geworden, kann seine individuelle Prüffrequenz in Abhängigkeit der Schwere einer begangenen Verkehrswidrigkeit herabgesetzt werden, ausgehend von einer Voreinstellung von z. B. sechs Monaten auf bis zu drei Monate. In gleicher Weise kann bei Auffälligkeiten bei einer technischen Überprüfung oder bei einer Überprüfung des Erscheinungsbildes die Fahrzeugüberprüfungsfrequenz F₁ und/oder die Fahrzeugüberprüfungsfrequenz F₂ herabgesetzt werden.

Das System kann bei Bedarf oder Wunsch um weitere Funktionalitäten erweitert werden.

Gespeichert können schließlich noch weitere fahrerbezogene Daten werden, z. B, Berechtigungsklassen für Dienstwagen, Überprüfung von Arbeitserlaubnissen, Zugangsberechtigungen zu bestimmten Orten und zu speziellen Bereichen innerhalb eines Orts.

Das erfindungsgemäße Verfahren bzw. das erfindungsgemäße System ermöglichen in einer Weiterbildung bzw. Modifizierung auch das Einlesen von Fahrer- und Fahrzeugdaten aus einem digitalen Tacho sowie Weitergabe und Speicherung dieser Daten im System zum jeweiligen Fahrer.

Wenngleich bevorzugt die Überwachung des Besitzes eines Führerscheins sowie das erfolgreiche Durchlaufen einer Fahrzeugprüfung im Zentrum der Überlegungen steht, kann das erläuterte Verfahren auch auf beliebige andere Anwendungen übertragen werden, z. B. auf die Überprüfung, ob ein Pilot im Besitz einer gültigen Fluglizenz ist oder die Verifizierung der Echtheit von Designerprodukten, wobei entsprechende Lesegeräte an Verkaufsstellen oder auch unabhängig davon aufgestellt sein können und beispielsweise der Endkunde ermutigt werden kann, selbst eine Überprüfung an einem Netz von Lesegeräten vorzunehmen, wobei der Abgleich ebenfalls in einer Zentraleinheit vorgenommen werden kann und diese Zentraleinheit eine entsprechende Bestätigung bei erfolgreicher Prüfung ausgeben kann.

### Bezugszeichenliste

- 1: Fahrzeugführungserlaubnis (Führerschein)
- 2: Überprüfungssystem
- 3: Identifikationsmerkmal/-element
- 4: Lesegerät
- 5: Zentraleinheit
- 6: Speicherbereich für die Prüfparameter
- 7: Datenfernübertragungsverbindung
- 8: Mobiltelefon
- 9: Dateneingabevorrichtung (Tastatur)
- 10: Anzeigevorrichtung (Monitor)
- 11: Fahrzeugüberprüfungsstellen

- Pᵢ: individueller Prüfparameter
(Prüffrequenz)
- F₁: erste Fahrzeugprüffrequenz
- F₂: zweite Fahrzeugprüffrequenz
- Ü_{T}: technische Überprüfung
- Ü_{E}: Überprüfung des Erscheinungsbildes

## Patentansprüche

1. Verfahren zur automatischen Überprüfung einer Anzahl Personen auf deren Besitz einer Fahrzeugführungserlaubnis (1), insbesondere auf Besitz eines Führerscheins, mit einem Überprüfungssystem (2), bei dem jede zu prüfende Person nach Aufforderung zur Überprüfung durch das Überprüfungssystem (2) die mit einem Identifikationsmerkmal (3) versehene Fahrzeugführungserlaubnis (1) von einem Lesegerät (4) lesen lässt, das Bestandteil des Überprüfungssystems (2) ist, wobei in dem Überprüfungssystem (2) eine Prüfung und Dokumentation der Fahrzeugführungserlaubnis (1) dahingehend erfolgt, ob und wann die geprüfte Person die Fahrzeugführungserlaubnis (1) zur Prüfung vorgelegt hat,
**dadurch gekennzeichnet, dass**
durch das Überwachungssystem (2) zusätzlich überprüft wird, ob eine oder mehrere der einer zu überprüfenden Person zugeordneten Fahrzeuge innerhalb einer vorgegebenen Fahrzeugprüffrequenz F_{1,2} eine technische Überprüfung Ü_{T} und/oder eine Überprüfung Ü_{E} des Erscheinungsbildes erfolgreich absolviert haben.

2. Verfahren nach Anspruch 1,
**dadurch gekennzeichnet,**
**dass** das Überprüfungssystem (2) eine Zentraleinheit (5) aufweist, wobei die Überprüfung durch Eingabe der mit einem Identifikationsmerkmal (3) versehenen Fahrzeugführungserlaubnis (1) in das Lesegerät (3) an einem von der Zentraleinheit (5) beabstandeten Ort erfolgt.

3. Verfahren nach Anspruch 1 oder 2
**dadurch gekennzeichnet,**
**dass** mit dem Lesegerät (4) auch ein originalgetreues Bild des Identifikationsmerkmals (3), welches vorzugsweise im Lesegerät (4) abgespeichert und/oder an eine Zentraleinheit (5) weitergeleitet wird, erfasst wird.

4. Verfahren nach einem der vorhergehenden Ansprüche,
**dadurch gekennzeichnet,**
**dass** als Identifikationsmerkmal eine optische Kennung zum Einsatz kommt, welche vorzugsweise durch Drehen ausgelesen wird.

5. Verfahren nach Anspruch 4,
**dadurch gekennzeichnet,**
**dass** als optische Kennung ein Hologramm und /oder Kinegramm zum Einsatz kommt.

6. Verfahren nach einem der vorhergehenden Ansprüche,
**dadurch gekennzeichnet,**
**dass** zusätzlich vom Überwachungssystem vor oder während der Überprüfung der Fahrzeugführungserlaubnis (1) und der technischen Überprüfung und/oder der Überprüfung des optischen Erscheinungsbildes, Fragen angeboten werden, die zum Abschluss der Überprüfungen beantwortet werden müssen.

7. Verfahren nach einem der vorhergehenden Ansprüche,
**dadurch gekennzeichnet,**
**dass** nach der Aufforderung zur Überprüfung zusätzlich durch das Prüfungssystem Daten einer mit einem Identifikationsmerkmal versehenen Fahrerkarte und/oder Daten einer mit einem Identifikationsmerkmal versehenen Fahrzeugkarte über das Lesegerät ausgelesen werden.

8. Verfahren nach einem der vorhergehenden Ansprüche,
**dadurch gekennzeichnet,**
**dass** durch das Überwachungssystem (2) überwacht wird, ob innerhalb einer ersten Fahrzeugprüffrequenz F₁ die technische Überprüfung Ü_{T}, insbesondere nach BGV D29, erfolgreich absolviert wurde.

9. Verfahren nach einem der vorhergehenden Ansprüche,
**dadurch gekennzeichnet,**
**dass** durch das Überwachungssystem (2) überwacht wird, ob innerhalb einer zweiten Fahrzeugprüffrequenz F₂ die Überprüfung des Erscheinungsbildes Ü_{E} (optische Zustandskontrolle) erfolgreich absolviert wurde.

10. Verfahren nach einem der vorhergehenden Ansprüche,
**dadurch gekennzeichnet,**
**dass** zumindest die zweite Fahrzeugprüffrequenz F₂ einstell- bzw. änderbar, vorzugsweise auch für eine zu überprüfende Person individuell verändert, insbesondere erhöht oder verringert werden kann.

11. Verfahren nach einem der vorhergehenden Ansprüche,
**dadurch gekennzeichnet,**
**dass** zumindest für einen Teil der zu überprüfenden Fahrzeugführungserlaubnisse mindestens ein individueller Prüfparameter (Pᵢ) festgelegt wird.

12. Überprüfungssystem zur automatischen Überprüfung einer Anzahl Personen auf deren Besitz einer Fahrzeugführungserlaubnis (1), insbesondere auf Besitz eines Führerscheins, wobei das Überprüfungssystem (2) eine Zentraleinheit (5) sowie mindestens ein Lesegerät (4) aufweist, in das die zu prüfende Person die mit einem Identifikationsmerkmal (3) versehene Fahrzeugführungserlaubnis (1) einlesen lassen kann, insbesondere zur Durchführung des Verfahrens nach einem der Ansprüche 1 bis 15,
**dadurch gekennzeichnet,**
**dass** das Überprüfungssystem (2) mit Eingabemitteln oder einer Datenverarbeitungsanlage bei Fahrzeugüberprüfungsstellen in Wirkverbindung steht, wobei über die Eingabemittel bzw. die DV-Anlage der Fahrzeugüberprüfungsstelle das Ergebnis einer Fahrzeugüberprüfung (Ü_{T}, Ü_{E}) an die Zentraleinheit (5) übermittelt wird.

13. Überprüfungssystem nach Anspruch 12,
**dadurch gekennzeichnet,**
**dass** das Identifikationsmerkmal eine optische Kennung, welche vorzugsweise durch Drehen auslesbar ist, insbesondere ein Hologramm und/oder ein Kinegramm, umfasst.

14. Überprüfungssystem nach Anspruch 12 oder 13,
**dadurch gekennzeichnet,**
**dass** das Überprüfungssystem überprüft, ob eine oder mehrere der einer zu überprüfenden Person zugeordneten Fahrzeuge innerhalb einer vorgegebenen Fahrzuegprüffrequenz F_{1,2} eine technische Überprüfung Ü_{T} und/oder eine Überprüfung Ü/F des Erscheinungsbildes erfolgreich absolviert haben.

15. Überprüfungssystem nach einem der Ansprüche 12 bis 14,
**dadurch gekennzeichnet,**
**dass** die Zentraleinheit (5) einen Speicherbereich (6) aufweist, in dem für jede zu überprüfende Person mindestens ein individueller Prüfparameter (Pᵢ), insbesondere eine individuelle Prüffrequenz, und/oder eine erste Fahrzeugprüffrequenz F₁ und/oder eine zweite Fahrzeugprüffrequenz F₂ speicherbar ist.

16. Überprüfungssystem nach einem der Ansprüche 13 bis 15,
**dadurch gekennzeichnet,**
**dass** die optische Kennung originalgetreu auslesbar und abspeicherbar ist.
